# EUROPÄISCHE PATENTSCHRIFT

(11) **EP 2 611 651 B1**
(45) Veröffentlichungstag und Bekanntmachung des Hinweises auf die Patenterteilung: **24.05.2017**
(21) Anmeldenummer: 11752213.6
(22) Anmeldetag: 02.09.2011
(51) Int. Cl.: B60N 2/48

(54) **FAHRZEUGSITZ MIT EINER KOPFSTÜTZE**
VEHICLE SEAT COMPRISING A HEAD RESTRAINT
SIÈGE DE VÉHICULE ÉQUIPÉ D'UN APPUIE-TÊTE

(30) Priorität: 03.09.2010 DE 102010044357
(43) Veröffentlichungstag der Anmeldung: 10.07.2013
(73) Patentinhaber: Johnson Controls GmbH, 51399 Burscheid (DE)
(72) Erfinder: VOLANEK, Peter, 01841 Dubnica nad Vahom (SK); MCKENNA, John, Maldon Essex CM9 5EN (GB); JAKUBEC, Ivan, 91701 Trnava (SK); OSKA, Radovan, 92203 Vrbove (SK); STRÁNSKY, Ján, 95701 Banove n. B. (SK)
(74) Vertreter: Finger, Catrin
(86) Internationale Anmeldenummer: PCT/EP2011/065181
(87) Internationale Veröffentlichungsnummer: WO 2012/028711

(56) Entgegenhaltungen:
- EP-A1- 1 447 265
- WO-A1-2005/065992
- DE-A1-102004 027 385
- DE-B3-102004 022 155
- JP-A- 2009 179 218
- National Highway And Traffic Safety Administration: "Federal Motor Vehicle Safety Standards; Head Restraints", , 14. Dezember 2004 (2004-12-14), XP55021469, Gefunden im Internet: URL:http://edocket.access.gpo.gov/2004/pdf /04-26641.pdf [gefunden am 2012-03-09]

## Beschreibung

Die Erfindung betrifft einen Fahrzeugsitz mit einer Kopfstütze nach dem Oberbegriff des Patentanspruchs 1.

Aus dem Stand der Technik sind allgemein Fahrzeugsitze bekannt, die eine höhenverstellbare Kopfstütze aufweisen und einem auf dem Fahrzeugsitz befindlichem Fahrzeuginsassen bei gerader oder leicht geneigter Sitzlehne ermöglichen, den Kopf an der Kopfstütze anzulehnen. Üblicherweise sind solche Kopfstützen manuell justierbar oder sind mittels einer Stelleinheit automatisch verstellbar. Dabei ermöglicht die Kopfstütze dem Fahrzeuginsassen während der Fahrt eine bequeme Sitzposition. Des Weiteren dient die Kopfstütze der Vermeidung von Verletzungen des Fahrzeuginsassen bei einem Unfall.

Insbesondere sind Verletzungen durch ein Schleudertrauma mittels einer korrekt eingestellten und arretierten Kopfstütze vermeidbar. Deshalb wurde in den USA ein Sicherheitsstandard FMVSS 202a erlassen, nachdem eine Kopfstütze eine Kennlinie, die von einer Sitzposition des Fahrzeuginsassen bestimmt ist, um mindestens 10 Grad in Richtung einer vertikalen Referenzlinie neigt, wenn sich die Kopfstütze in einer versenkten unteren Position befindet.

Aus der DE 10 2004 022 155 B3 ist eine Rückenlehne mit höhenverstellbarer Kopfstütze, die für einen Fahrzeugsitz vorgesehen ist, bekannt. Die Kopfstütze ist an zumindest einer an einem Lehnenrahmen höhenverschieblichen Tragstange angeordnet. Eine Benutzung des Fahrzeugsitzes soll nur möglich sein, wenn die Kopfstütze in eine Mindesthöhenstellung oder darüber hinaus hochgestellt ist. Dazu ist die Tragstange mechanisch mit einem Sperrteil verbunden, welches in Abhängigkeit von der Höhenposition der Kopfstütze quer zur Lehnenvorderseite beweglich ist. Nach Unterschreiten der Mindesthöhenstellung der Kopfstütze steht das Sperrteil an der Lehnenvorderseite vor und nach Überschreiten der Mindesthöhenstellung der Kopfstütze ist es in die Lehne bis hinter die Lehnenvorderseite eingesenkt.

Aus der EP 1 447 265 A1 ist eine einziehbare Kopfstütze bekannt, die sich ausfahren lässt, um einen Passagier zu schützen, und die einziehbar ist, um die Sicht des Fahrers nach hinten zu verbessern.

Aus der WO 2005/065992 A1 ist eine Kopfstütze bekannt. Die Kopfstütze ist an einer Sitzlehne eines Kraftfahrzeugsitzes angeordnet und weist Mittel auf, durch die ein Versenken der Kopfstütze aus einer Gebrauchsstellung in eine Nichtgebrauchsstellung ausführbar ist. Die Kopfstütze ermöglicht in der Nichtgebrauchsstellung eine freie Sicht eines Insassen nach hinten. Die Kopfstütze ist in die Nichtgebrauchsstellung in eine versenkte Position vor die Sitzlehne verlagerbar und bildet eine Störkontur aus.

Aus der DE 10 2004 034 158 A1 ist eine Kopfstütze für einen Fahrzeugsitz bekannt, die zwischen einer Gebrauchstellung und einer Nichtgebrauchsstellung bewegbar ist, wobei die Kopfstütze in der Nichtgebrauchsstellung eine freie Sicht des Fahrzeuginsassen nach hinten ermöglicht. Die in die Nichtgebrauchsstellung gebrachte Kopfstütze bildet vor der Sitzlehne eine Störkontur aus, so dass ein auf dem Fahrzeugsitz befindlicher Fahrzeuginsasse gezwungen ist, die Kopfstütze in die Gebrauchsstellung zu bringen, bevor der Fahrzeugsitz komfortabel genutzt werden kann.

Aus der DE 10 2004 018 964 B3 ist eine Kopfstützanordnung bekannt, die von einer Stützstellung in eine Klappstellung abklappbar ist. Ein Stützabschnitt ist derart an einem Grundabschnitt gelenkig gelagert, dass der bepolsterte Stützabschnitt in der Klappstellung den Grundabschnitt nicht oder nicht wesentlich überragt.

Weitere Kopfstützanordnungen sind aus der DE 10 2004 027 385 A1, DE 10 2006 003 881 A1, DE 10 2004 003 882 B3, JP 2009 179 218 A und DE 10 2004 003 883 B3 bekannt.

Zudem wird JP 2009 179218 A als nächstliegender Stand der Technik betrachtet. Es beschreibt einen Fahrzeugsitz entsprechend dem Oberbegriff des Anspruchs 1.

Aufgabe der vorliegenden Erfindung ist es, einen verbesserten Fahrzeugsitz mit einer Kopfstütze und einer Sitzlehne anzugeben, der eine Verletzung eines Fahrzeuginsassen bei Unfällen vermeidet.

Die Aufgabe wird erfindungsgemäß gelöst durch einen Fahrzeugsitz mit einer Kopfstütze und einer Sitzlehne mit den charakterisierenden Merkmalen des Patentanspruchs 1.

Bevorzugte Ausgestaltungen der Erfindung sind Gegenstand der Unteransprüche.

Bei einem Fahrzeugsitz mit einer Kopfstütze und einer Sitzlehne ist die Kopfstütze zwischen einer Gebrauchsposition und einer Nichtgebrauchsposition bewegbar. Dabei ist innerhalb der Sitzlehne zumindest ein Störelement mittels einer Schwenkvorrichtung schwenkbar gelagert, wobei die Kopfstütze in der Nichtgebrauchsposition das zumindest eine Störelement der Sitzlehne derart positioniert, dass das Störelement zumindest einen Berührpunkt mit einem Torso eines auf dem Fahrzeugsitz befindlichen Fahrzeuginsassen ausbildet.

Damit ist der Fahrzeuginsasse dazu veranlasst, die Kopfstütze in eine korrekte Gebrauchsstellung zu bringen, bevor die Fahrt aufgenommen wird, so dass eine Verletzungsgefahr des Fahrzeuginsassen, insbesondere im Bereich der Halswirbelsäule, verringert ist.

Eine mögliche Ausführungsform sieht vor, dass das Störelement durch Ausbeulung einer Polsterung der Sitzlehne den zumindest einen Berührpunkt bildet. Insbesondere ist das Störelement von der Polsterung überdeckt und somit vor Verschmutzung und anderen mechanischen Beanspruchungen geschützt angeordnet. Darüber hinaus sieht eine Weiterbildung vor, dass das Störelement ab einer vorgegebenen, insbesondere einer Nichtgebrauchsposition entsprechenden minimalen Einfahrtiefe der Kopfstütze den zumindest einen Berührpunkt mit einer vorgegebenen maximalen Ausbeulung der Polsterung ausbildet. Bei über diese minimale Einfahrtiefe hinausgehenden Einfahrtiefen der Kopfstütze in der Nichtgebrauchsposition bleibt das Störelement in einer solchen ausgeschwenkten Position gehalten, in welcher das Störelement stets die maximale Ausbeulung der Polsterung ausbildet.

In einer bevorzugten Ausgestaltung der Erfindung unterstützt die Sitzlehne und die Kopfstütze in der Gebrauchsposition eine erste Sitzposition des Fahrzeuginsassen, die eine erste Kennlinie bestimmt. Ist die Kopfstütze in der Nichtgebrauchsposition positioniert, so ist insbesondere die freie Sicht des Fahrzeuginsassen entgegen einer Fahrtrichtung ermöglicht. In der Nichtgebrauchsposition unterstützt der Berührpunkt des Störelements mit dem Torso eine zweite Sitzposition des Fahrzeuginsassen, die eine zweite Kennlinie bestimmt. Aufgrund der für den Fahrzeuginsassen ungewohnten zweiten Sitzposition ist der Fahrzeuginsasse dazu veranlasst, die Kopfstütze in die Gebrauchsposition zu führen, woraufhin die gewohnte erste Sitzposition zu Fahrtbeginn eingenommen werden kann.

Bei einer weiteren möglichen Ausbildung der Erfindung ist ein erster Neigungswinkel zwischen der ersten Kennlinie und einer vertikalen Referenzlinie größer als ein zweiter Neigungswinkel zwischen der zweiten Kennlinie und der vertikalen Referenzlinie. Der Fahrzeuginsasse in der zweiten Sitzposition nimmt somit eine ungewohnte, aufrechte Haltung ein, die ihn daran erinnert, dass die Kopfstütze in der Nichtgebrauchsposition positioniert ist und in die Gebrauchsposition zu führen ist.

Bevorzugterweise beträgt eine Neigungswinkeldifferenz zwischen dem ersten Neigungswinkel und dem zweiten Neigungswinkel zumindest 10 Grad, so dass der Fahrzeuginsasse einen deutlich merkbaren Hinweis erhält, die Kopfstütze in die korrekte Gebrauchsposition vor Fahrtbeginn zu führen, um Verletzungen zu vermeiden.

Einer weiteren bevorzugten Ausführungsform der Erfindung zufolge ist das Störelement an der Sitzlehne schwenkbar gelagert. Damit ist auf besonders einfache Weise die Ausbildung des Berührpunktes erreicht.

Eine Befestigungsstange der Kopfstütze wirkt mit dem Störelement zur Positionierung des Störelements zusammen. Die Positionierung des Störelements mittels der Kopfstütze ist auf rein mechanische Art und Weise ermöglicht. Damit ist ein besonders zuverlässiges Zusammenwirken der Kopfstütze mit dem Störelement erreicht, bei dem Störungen weitgehend vermieden sind.

Einer weiteren bevorzugten Ausführungsform der Erfindung zufolge umfasst das Störelement eine abgerundete Kontur, die zur Ausbildung des Berührpunktes des Störelements mit dem Torso des Fahrzeuginsassen dient.

Bevorzugterweise ist eine Polsterung zwischen dem Torso des Fahrzeuginsassen und dem Störelement angeordnet, um den Komfort des Fahrzeuginsassen in der ersten Sitzposition weitgehend sicherzustellen, wobei die Kopfstütze in der Gebrauchsposition positioniert ist.

Darüber hinaus ist bevorzugt, dass zumindest zwei parallel zueinander angeordnete Störelemente zumindest zwei Berührpunkte ausbilden. Damit ist erreicht, dass der Fahrzeuginsasse selbst dann von den Störelementen daran erinnert wird, die Kopfstütze in die Gebrauchsposition zu führen, wenn eine nicht zentrierte oder seitlich versetzte Sitzposition eingenommen wird.

Einer weiteren möglichen Ausführungsform der Erfindung zufolge ist die Kopfstütze in der Gebrauchsposition arretierbar. Dabei ist eine obere Abmessung der Kopfstütze in der Gebrauchsposition in einer vertikalen Richtung von einem Hüftpunkt um einen vorgebbaren vertikalen Abstand beabstandet. Im Hüftpunkt schneiden sich die vertikale Referenzlinie, die erste Kennlinie der ersten Sitzposition und die zweite Kennlinie der zweiten Sitzposition. Die Arretierung der Kopfstütze im vorgebbaren vertikalen Abstand ermöglicht eine vorteilhafte Anpassung der Höhe der Kopfstütze auf eine Körpergröße des Fahrzeuginsassen, so dass Verletzungen insbesondere im Halswirbelbereich weitgehend vermeidbar sind.

Anhand der beigefügten schematischen Figuren wird die Erfindung näher erläutert.

### Dabei zeigen:

- Figur 1: schematisch eine Schnittdarstellung eines Fahrzeugsitzes mit einer Kopfstütze in einer Gebrauchsposition,
- Figur 2: schematisch eine Schnittdarstellung eines Fahrzeugsitzes mit einer Kopfstütze in einer Nichtgebrauchsposition,
- Figur 3: eine perspektivische Ansicht einer Kopfstütze und einer Sitzlehne ohne Polsterung, wobei die Kopfstütze in einer Gebrauchsposition angeordnet ist,
- Figur 4: eine perspektivische Ansicht einer Kopfstütze und einer Sitzlehne ohne Polsterung, wobei die Kopfstütze in einer Nichtgebrauchsposition angeordnet ist.

Gleiche Teile sind in allen Figuren mit den gleichen Bezugszeichen versehen.

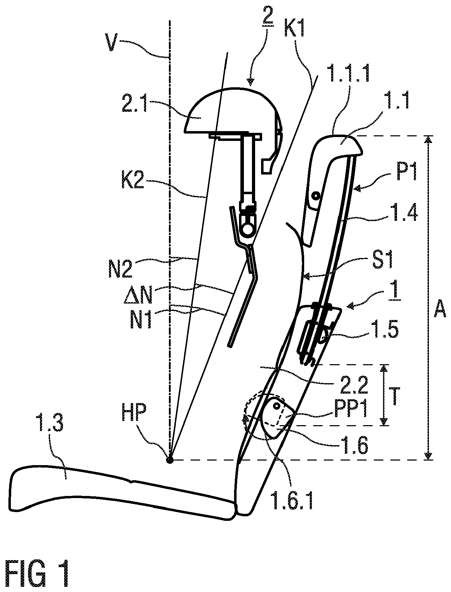

Die Figur 1 zeigt in einer schematischen Schnittdarstellung einen Fahrzeugsitz 1 mit einer Kopfstütze 1.1, einer Sitzlehne 1.2 und einem Sitzflächenteil 1.3. Die Kopfstütze 1.1 ist in einer Gebrauchsposition P1 arretiert, in der die Kopfstütze 1.1 von der Sitzlehne 1.2 vertikal beabstandet ist.

Die Kopfstütze 1.1 ist mittels Befestigungsstangen 1.4 mit der Sitzlehne 1.2 verbunden, wobei ein im Wesentlichen vertikaler Abstand A zwischen Sitzlehne 1.2 und Kopfstütze 1.1 einstellbar ist. Zur Arretierung der Kopfstütze 1.1 in der Gebrauchsposition P1 ist eine Arretiervorrichtung 1.5 vorgesehen, die insbesondere eine Rastverbindung mit der Befestigungsstange 1.4 eingehen kann.

Unterhalb der Polsterung der Sitzlehne 1.2 ist ein Störelement 1.6 angeordnet, das eine abgerundete Kontur 1.6.1 aufweist und um eine zur dargestellten Schnittebene senkrecht verlaufende Achse schwenkbar ist. Das Störelement 1.6 ist, wenn die Kopfstütze 1.1 in der Gebrauchsposition P1 positioniert ist, in einer eingeklappten ersten Position PP1 angeordnet. In der ersten Position PP1 steht das Störelement 1.6 über der Oberflächenebene der Sitzlehne 1.2 nicht vor, sondern ist in der Sitzlehne 1.2 versenkt, so dass der Fahrzeuginsasse in einer gewohnten Position auf dem Fahrzeugsitz 1 Platz nehmen kann.

Mit anderen Worten: Das Störelement 1.6 ist innerhalb der Sitzlehne 1.2 angeordnet und von einer Polsterung der Sitzlehne 1.2 bedeckt.

Auf dem Fahrzeugsitz 1 ist eine Personenattrappe 2 angeordnet, die eine Kopfkugel 2.1 und einen Torso 2.2 umfasst. Die Personenattrappe 2 repräsentiert die Körperhaltung eines Fahrzeuginsassen in einer ersten Sitzposition S1. Die Kopfstütze 1.1 und die Sitzlehne 1.2 berühren den Torso 2.1 an mehreren Stellen, so dass die erste Sitzposition S1 von der Sitzlehne 1.2 und der Kopfstütze 1.1 unterstützt wird. Dabei bestimmt die Körperhaltung des Fahrzeuginsassen in der ersten Sitzposition S1 eine erste Kennlinie K1, die im Wesentlichen die räumliche Ausrichtung des Körpers des Fahrzeuginsassen bezüglich einer vertikalen Referenzlinie V wiedergibt.

Die erste Kennlinie K1 und die vertikale Referenzlinie V schneiden sich in einem Hüftpunkt HP, der sich auf Hüfthöhe der auf dem Fahrzeugsitz 1 angeordneten Personenattrappe 2 befindet. Die erste Kennlinie K1 schließt mit der vertikalen Referenzlinie V einen ersten Neigungswinkel N1 ein.

Die Kopfstütze 1.1 ist in der Gebrauchsposition P1 derart arretierbar, dass ein vertikaler Abstand A parallel zur vertikalen Referenzlinie V einer oberen Abmessung 1.1.1 der Kopfstütze 1.1 in der Gebrauchsposition P1 zu dem Hüftpunkt HP vorgebbar ist.

In einer bevorzugten Ausgestaltung ist der vorgebbare vertikale Abstand A zumindest 750 mm.

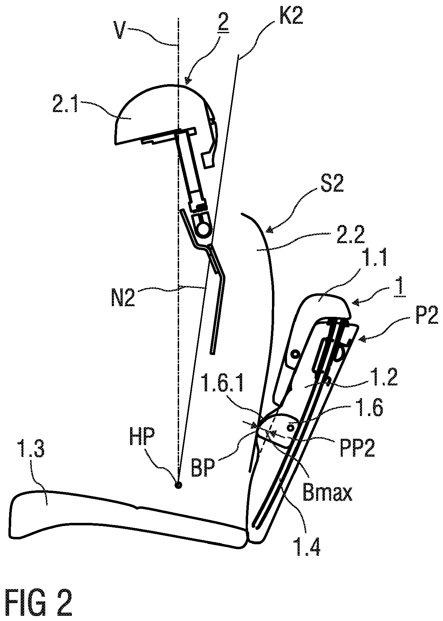

Das Störelement 1.6 und die Kopfstütze 1.1 mit der Befestigungsstange 1.4 sind dabei derart zueinander an der Sitzlehne 1.2 angeordnet, dass das Störelement 1.6 im ausgeschwenkten Zustand (gestrichelte Darstellung in Figur 1 und Vollliniendarstellung in Figur 2) ab einer vorgegebenen, insbesondere einer Nichtgebrauchsposition entsprechenden minimalen Einfahrtiefe T der Kopfstütze 1.1 zumindest einen Berührpunkt BP mit einer vorgegebenen maximalen Ausbeulung Bmax der Polsterung (in Figur 2 näher dargestellt) ausbildet. Bei über diese minimale Einfahrtiefe T hinausgehenden Einfahrtiefen der Kopfstütze 1.1 bleibt das Störelement 1.6 in der ausgeschwenkten Position und somit im ausgeschwenkten Zustand gehalten, in welcher das Störelement 1.6 stets die maximale Ausbeulung Bmax der Polsterung ausbildet.

Figur 2 zeigt schematisch eine Schnittdarstellung des Fahrzeugsitzes 1 mit der Kopfstütze 1.1 in einer Nichtgebrauchsposition P2. Die Kopfstütze 1.1 in der Nichtgebrauchsposition P2 ist versenkt angeordnet und steht der Sitzlehne 1.2 nur unwesentlich in einer vertikalen Richtung über.

Die Befestigungsstange 1.4 ist im Wesentlichen vollständig in die Sitzlehne 1.2 eingeschoben, wenn die Kopfstütze 1.1 in der Nichtgebrauchsstellung P2 angeordnet ist. Dabei stößt die Befestigungsstange 1.4 derart seitlich an das Störelement 1.6 an, dass das Störelement 1.6 um die zur dargestellten Schnittebene senkrecht verlaufende Achse geschwenkt und in einer zweiten Position PP2 angeordnet ist. In der zweiten Position PP2 steht die abgerundete Kontur 1.6.1 des Störelements 1.6 der Sitzlehne 1.2 derart vor, dass zumindest ein Berührpunkt BP mit dem Torso 2.2 der Personenattrappe 2 ausgebildet wird, wobei zwischen dem Torso 2.2 und dem Störelement 1.6 eine Polsterung der Sitzlehne 1.2 in nicht näher dargestellter Weise angeordnet ist.

Die in Figur 2 dargestellte Personenattrappe 2 repräsentiert die Körperhaltung des Fahrzeuginsassen, der wegen des Berührpunkts BP des Störelements 1.6 mit dem Torso 2.2 eine zweite Sitzposition S2 einnimmt. Die zweite Sitzposition S2 bestimmt im Wesentlichen eine zweite Kennlinie K2, die die Ausrichtung des Körpers des Fahrzeuginsassen bezüglich der vertikalen Referenzlinie V anzeigt. Die vertikale Referenzlinie V und die zweite Kennlinie K2 schneiden sich in dem gemeinsamen Hüftpunkt HP. Die zweite Kennlinie K2 schließt mit der vertikalen Referenzlinie V einen zweiten Neigungswinkel N2 ein.

Die zweite Kennlinie K2 ist, im Vergleich zur ersten Kennlinie K1, in Richtung der vertikalen Referenzlinie V geneigt. Der zweite Neigungswinkel ist kleiner als der erste Neigungswinkel N1. Der Fahrzeuginsasse nimmt somit in der zweiten Sitzposition S2 eine im Vergleich zur ersten Sitzposition S1 aufrechte Haltung ein. Zum besseren Vergleich von erster und zweiter Kennlinie K1, K2 ist in Figur 1 die zweite Kennlinie K2 zusätzlich eingezeichnet.

In einer bevorzugten Ausbildungsform der Erfindung ist die Neigungswinkeldifferenz ΔN zwischen erstem und zweitem Neigungswinkel N1, N2 zumindest 10 Grad.

Darüber hinaus ist in Figur 2 das Störelement 1.6 im ausgeschwenkten Zustand gezeigt, in welchem das Störelement 1.6 durch Ausbeulung der Polsterung der Sitzlehne 1.2 den zumindest einen Berührpunkt BP bildet. Sowohl bei Erreichen der minimalen Einfahrtiefe T als auch bei über diese minimale Einfahrtiefe T hinausgehenden Einfahrtiefen der Kopfstütze 1.1 bleibt das Störelement 1.6 in der ausgeschwenkten Position und somit im ausgeschwenkten Zustand gehalten, in welcher das Störelement 1.6 stets die maximale Ausbeulung Bmax der Polsterung ausbildet, durch welche ein auf dem Fahrzeugsitz 1 sitzender Fahrzeuginsasse darauf hingewiesen wird, die Kopfstütze 1.1 in die Gebrauchsposition P1 zu stellen.

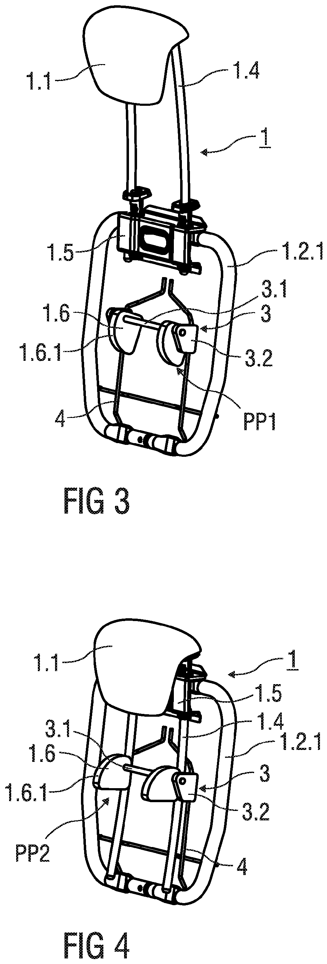

Figur 3 zeigt eine perspektivische Darstellung der Kopfstütze 1.1 und der Sitzlehne 1.2 ohne Polsterung. Die Kopfstütze 1.1 ist mittels der Arretiervorrichtung 1.5 in die Gebrauchsposition P1 arretiert.

Die Sitzlehne 1.2 weist einen umlaufenden Sitzlehnenrahmen 1.2.1 auf. Zwei parallel zueinander angeordnete Störelemente 1.6 sind mittels einer Schwenkvorrichtung 3 bezüglich der Sitzlehne 1.2 schwenkbar gelagert. Die Schwenkvorrichtung 3 umfasst eine Schwenkachse 3.1, mit der die Störelemente 1.6 verbunden sind, und ein Seitenelement 3.2. Die Schwenkvorrichtung 3 ist mittels draht- oder rohrförmiger Befestigungselemente 4 mit dem Sitzlehnenrahmen 1.2.1 verbunden. Dazu kommen herkömmliche kraft-, form- und/oder stoffschlüssige Verbindungen, wie beispielsweise Niet-, Schraub- und/oder Schweißverbindungen zum Einsatz.

Bevorzugterweise sind der Sitzlehnenrahmen 1.2.1 und das Befestigungselement 4 aus einem Metall gefertigt. Alternativ dazu können der Sitzlehnenrahmen 1.2.1 und/oder das Befestigungselement 4 aus einem Kunststoffmaterial bestehen.

Figur 4 zeigt eine perspektivische Darstellung der Kopfstütze 1.1 mit Polsterung und der Sitzlehne 1.2 ohne Polsterung. Die Kopfstütze 1.1 ist mittels der Arretiervorrichtung 1.5 in die Nichtgebrauchsposition P2 positioniert. Jeweils eine der beiden Befestigungsstangen 1.4 grenzt seitlich an jeweils ein Störelement 1.6 an und positioniert dadurch das Störelement 1.6 in die zweite Position PP2, in der das Störelement 1.6 in einer Richtung senkrecht zur vertikalen Referenzlinie V vorsteht. Jedes der beiden Störelemente 1.6 bildet einen Berührpunkt BP mit dem Torso 2.2 des Fahrzeuginsassen aus.

### Bezugszeichenliste

- 1: Fahrzeugsitz
- 1.1: Kopfstütze
- 1.1.1: obere Abmessung
- 1.2: Sitzlehne
- 1.2.1: Sitzlehnenrahmen
- 1.3: Sitzflächenteil
- 1.4: Befestigungsstange
- 1.5: Arretiervorrichtung
- 1.6: Störelement
- 1.6.1: abgerundete Kontur
- 2: Personenattrappe
- 2.1: Kopfkugel
- 2.2: Torso
- 3: Schwenkvorrichtung
- 3.1: Schwenkachse
- 3.2: Seitenelement
- 4: Befestigungselement
- Bmax: maximale Ausbeulung
- P1: Gebrauchsposition
- P2: Nichtgebrauchsposition
- PP1: erste Position
- PP2: zweite Position
- S1: erste Sitzposition
- S2: zweite Sitzposition
- K1: erste Kennlinie
- K2: zweite Kennlinie
- V: vertikale Referenzlinie
- A: vertikaler Abstand
- N1: erster Neigungswinkel
- N2: zweiter Neigungswinkel
- ΔN: Neigungswinkeldifferenz
- HP: Hüftpunkt
- BP: Berührpunkt
- T: Einfahrtiefe

## Patentansprüche

1. Fahrzeugsitz (1) mit einer Kopfstütze (1.1) und einer Sitzlehne (1.2), wobei die Kopfstütze (1.1) zwischen einer Gebrauchsposition (P1) und einer Nichtgebrauchsposition (P2) bewegbar ist, wobei innerhalb der Sitzlehne (1.2) zumindest ein Störelement (1.6) mittels einer Schwenkvorrichtung (3) schwenkbar gelagert ist, wobei die Kopfstütze (1.1) in der Nichtgebrauchsposition (P2) das zumindest eine Störelement (1.6) der Sitzlehne (1.2) derart positioniert, dass das Störelement (1.6) zumindest einen Berührpunkt (BP) mit einem Torso (2.2) eines auf dem Fahrzeugsitz befindlichen Fahrzeuginsassen ausbildet,
**dadurch gekennzeichnet, dass**
- das zumindest eine Störelement (1.6) eine abgerundete Kontur (1.6.1) aufweist und um eine transversale Achse schwenkbar ist,
- das Störelements (1.6) ab einer vorgegebenen, einer Nichtgebrauchsposition entsprechenden minimalen Einfahrtiefe (T) der Kopfstütze (1.1) den zumindest einen Berührpunkt (BP) mit einer vorgegebenen maximalen Ausbeulung der Polsterung ausbildet, wobei das Störelement (1.6) bei einer über diese minimale Einfahrtiefe (T) hinausgehenden Einfahrtiefe der Kopfstütze (1.1) in der ausgeschwenkten Position verbleibt.

2. Fahrzeugsitz (1) nach Anspruch 1,
**dadurch gekennzeichnet, dass** das Störelement (1.6) durch Ausbeulung einer Polsterung der Sitzlehne (1.2) den zumindest einen Berührpunkt (BP) bildet.

3. Fahrzeugsitz (1) nach Anspruch 1 oder 2,
**dadurch gekennzeichnet, dass** das Störelement (1.6) ab einer vorgegebenen Einfahrtiefe (T) der Kopfstütze (1.1) den zumindest einen Berührpunkt (BP) mit einer vorgegebenen maximalen Ausbeulung (Bmax) der Polsterung ausbildet.

4. Fahrzeugsitz (1) nach einem der vorherigen Ansprüche,
**dadurch gekennzeichnet, dass** die Sitzlehne (1.2) und die Kopfstütze (1.1) in der Gebrauchsposition (P1) eine erste Sitzposition (S1) des Fahrzeuginsassen unterstützt, die eine erste Kennlinie (K1) bestimmt und der Berührpunkt (BP) des Torsos (2.2) eine zweite Sitzposition (S2) des Fahrzeuginsassen unterstützt, die eine zweite Kennlinie (K2) bestimmt.

5. Fahrzeugsitz (1) nach Anspruch 4,
**dadurch gekennzeichnet, dass** ein erster Neigungswinkel (N1) zwischen der ersten Kennlinie (K1) und einer vertikalen Referenzlinie (V) größer ist als ein zweiter Neigungswinkel (N2) zwischen der zweiten Kennlinie (K2) und der vertikalen Referenzlinie (V).

6. Fahrzeugsitz (1) nach Anspruch 5,
**dadurch gekennzeichnet, dass** eine Neigungswinkeldifferenz (ΔN) zwischen erstem Neigungswinkel (N1) und zweitem Neigungswinkel (N2) zumindest 10 Grad beträgt.

7. Fahrzeugsitz (1) nach einem der vorherigen Ansprüche,
**dadurch gekennzeichnet, dass** das Störelement (1.6) an der Sitzlehne (1.2) schwenkbar gelagert ist.

8. Fahrzeugsitz (1) nach einem der vorherigen Ansprüche,
**dadurch gekennzeichnet, dass** eine Befestigungsstange (1.4) der Kopfstütze (1.1) mit dem Störelement (1.6) zur Positionierung des Störelements (1.6) zusammen wirkt.

9. Fahrzeugsitz (1) nach einem der vorherigen Ansprüche, **dadurch gekennzeichnet, dass** zumindest zwei parallel zueinander angeordnete Störelemente (1.6) zumindest zwei Berührpunkte (BP) ausbilden.

10. Fahrzeugsitz (1) nach einem der vorherigen Ansprüche, **dadurch gekennzeichnet, dass** die Kopfstütze (1.1) in der Gebrauchsposition (P1) arretierbar ist, wobei eine obere Abmessung (1.1.1) der Kopfstütze (1,1) in der Gebrauchsposition (P1) in einer vertikalen Richtung von einem Hüftpunkt (HP), in dem sich vertikale Referenzlinie (V), erste Kennlinie (K1) und zweite Kennlinie (K2) schneiden, um einen vorgebbaren vertikalen Abstand (A) beabstandet ist.

## Claims

1. A vehicle seat (1) with a head restraint (1.1) and a seat back (1.2), the head restraint (1.1) being movable between a usage position (P1) and a non-usage position (P2), wherein at least one interfering element (1.6) is pivotably mounted inside the seat back (1.2) by means of a pivoting device (3), wherein in the non-usage position (P2) the head restraint (1.1) positions the at least one interfering element (1.6) of the seat back (1.2) in such a way that the interfering element (1.6) forms at least one contact point (BP) with the torso (2.2) of a vehicle occupant located on the vehicle seat,
**characterized in that**
- the at least one interfering element (1.6) comprises a rounded outline and is pivoted around a transverse axis, and
- starting from a pre-determined minimal depth of retraction (T) of the head restraint (1.1) corresponding to a non-usage position, the interfering element (1.6) forms the at least one contact point (BP) with a pre-determined maximal bulging of the upholstery, wherein the interfering element (1.6) remains in the pivoted out position when the depth of retraction of the head restraint (1.1) exceeds beyond said minimal depth of retraction (T).

2. The vehicle seat (1) as claimed in claim 1, **characterized in that** the interfering element (1.6) forms the at least one contact point (BP) by means of bulging of an upholstery of the seat back (1.2).

3. The vehicle seat (1) as claimed in claim 1 or 2, **characterized in that**, starting from a predetermined depth of retraction (T) of the head restraint (1.1), the interfering element (1.6) forms the at least one contact point (BP) with a predetermined maximal bulging (Bmax) of the upholstery.

4. The vehicle seat (1) as claimed in one of the preceding claims, **characterized in that** the seat back (1.2) and the head restraint (1.1) in the usage position (P1) support a first sitting position (S1) of the vehicle occupant which defines a first characteristic line (K1), and the contact point (BP) of the torso (2.2) supports a second sitting position (S2) of the vehicle occupant which defines a second characteristic line (K2).

5. The vehicle seat (1) as claimed in claim 4, **characterized in that** a first tilt angle (N1) between the first characteristic line (K1) and a vertical reference line (V) is greater than a second tilt angle (N2) between the second characteristic line (K2) and the vertical reference line (V).

6. The vehicle seat (1) as claimed in claim 5, **characterized in that** a tilt angle differential (ΔN) between first tilt angle (N1) and second tilt angle (N2) is at least 10 degrees.

7. The vehicle seat (1) as claimed in one of the preceding claims, **characterized in that** the interfering element (1.6) is pivotably mounted on the seat back (1.2).

8. The vehicle seat (1) as claimed in one of the preceding claims, **characterized in that** a mounting rod (1.4) of the head restraint (1.1) interacts with the interfering element (1.6) for the positioning of the interfering element (1.6).

9. The vehicle seat (1) as claimed in one of the preceding claims, **characterized in that** at least two interfering elements (1.6) arranged in parallel to one another form at least two contact points (BP).

10. The vehicle seat (1) as claimed in one of the preceding claims, **characterized in that** the head restraint (1.1) is lockable in the usage position (P1), wherein an upper dimension (1.1.1) of the head restraint (1.1) in the usage position (P1) is at a presetable vertical distance (A) in a vertical direction from a hip point (HP) in which vertical reference line (V), first characteristic line (K1) and second characteristic line (K2) intersect.

## Revendications

1. Siège de véhicule (1) comprenant un appui-tête (1.1) et un dossier de siège (1.2), l'appui-tête (1.1) pouvant être déplacé entre une position d'utilisation (P1) et une position de non-utilisation (P2), au moins un élément perturbateur (1.6) étant supporté de manière pivotante à l'intérieur du dossier de siège (1.2) au moyen d'un dispositif de pivotement (3), l'appui-tête (1.1), dans la position de non-utilisation (P2), positionnant l'au moins un élément perturbateur (1.6) du dossier de siège (1.2) de telle sorte que l'élément perturbateur (1.6) constitue au moins un point de contact (BP) avec un torse (2.2) d'un occupant du véhicule se trouvant sur le siège de véhicule,
**caractérisé en ce que**
- l'au moins un élément perturbateur (1.6) présente un contour arrondi (1.6.1) et peut pivoter autour d'un axe transversal,
- l'élément perturbateur (1.6), à partir d'une profondeur d'enfoncement minimale prédéfinie (T) de l'appui-tête (1.1) correspondant à une position de non-utilisation, constitue l'au moins un point de contact (BP) avec un bombement maximal prédéfini du rembourrage, l'élément perturbateur (1.6), dans le cas d'une profondeur d'enfoncement de l'appui-tête (1.1) dépassant cette profondeur d'enfoncement minimale (T), restant dans la position sortie par pivotement.

2. Siège de véhicule (1) selon la revendication 1, **caractérisé en ce que** l'élément perturbateur (1.6), par bombement d'un rembourrage du dossier de siège (1.2), forme l'au moins un point de contact (BP).

3. Siège de véhicule (1) selon la revendication 1 ou 2,
**caractérisé en ce que** l'élément perturbateur (1.6), à partir d'une profondeur d'enfoncement prédéfinie (T) de l'appui-tête (1.1), constitue l'au moins un point de contact (BP) avec un bombement maximal prédéfini (Bmax) du rembourrage.

4. Siège de véhicule (1) selon l'une quelconque des revendications précédentes,
**caractérisé en ce que** le dossier de siège (1.2) et l'appui-tête (1.1) supportent, dans la position d'utilisation (P1), une première position de siège (S1) de l'occupant du véhicule, qui définit une première courbe caractéristique (K1) et le point de contact (BP) du torse (2.2) supporte une deuxième position de siège (S2) de l'occupant du véhicule qui définit une deuxième courbe caractéristique (K2).

5. Siège de véhicule (1) selon la revendication 4, **caractérisé en ce qu'**un premier angle d'inclinaison (N1) entre la première courbe caractéristique (K1) et une ligne de référence verticale (V) est supérieur à un deuxième angle d'inclinaison (N2) entre la deuxième courbe caractéristique (K2) et la ligne de référence verticale (V).

6. Siège de véhicule (1) selon la revendication 5, **caractérisé en ce qu'**une différence d'angle d'inclinaison (ΔN) entre le premier angle d'inclinaison (N1) et le deuxième angle d'inclinaison (N2) vaut au moins 10 degrés.

7. Siège de véhicule (1) selon l'une quelconque des revendications précédentes,
**caractérisé en ce que** l'élément perturbateur (1.6) est supporté de manière pivotante sur le dossier de siège (1.2).

8. Siège de véhicule (1) selon l'une quelconque des revendications précédentes,
**caractérisé en ce qu'**une tige de fixation (1.4) de l'appui-tête (1.1) coopère avec l'élément perturbateur (1.6) pour positionner l'élément perturbateur (1.6).

9. Siège de véhicule (1) selon l'une quelconque des revendications précédentes,
**caractérisé en ce qu'**au moins deux éléments perturbateurs (1.6) disposés parallèlement l'un à l'autre constituent au moins deux points de contact (BP).

10. Siège de véhicule (1) selon l'une quelconque des revendications précédentes,
**caractérisé en ce que** l'appui-tête (1.1) peut être bloqué dans la position d'utilisation (P1), une dimension supérieure (1.1.1) de l'appui-tête (1.1) dans la position d'utilisation (P1) dans une direction verticale étant espacée d'une distance verticale prédéfinissable (A) d'un point des hanches (HP) au niveau duquel la ligne de référence verticale (V), la première courbe caractéristique (K1) et la deuxième courbe caractéristique (K2) s'intersectent.
